# EUROPÄISCHE PATENTANMELDUNG

(11) **EP 0 940 713 A1**
(43) Veröffentlichungstag der Anmeldung: **08.09.1999**
(21) Anmeldenummer: 99890028.6
(22) Anmeldetag: 28.01.1999
(51) Int. Cl.: G03B 31/04, G03B 17/24

(54) **Filmkamera mit Informationsaufzeichnung**

(30) Priorität: 03.03.1998 AT 36798
(71) Anmelder: Bauer, Fritz, A-3002 Purkersdorf (AT)
(72) Erfinder: Bauer, Fritz, A-3002 Purkersdorf (AT)
(74) Vertreter: Gibler, Ferdinand, Dipl.-Ing. Dr. techn.

(57) **Zusammenfassung**

Filmkamera mit einer Vorrichtung zur Aufzeichnung von Information, z.B. einer Buchstaben- und/oder Zahlenkombination, auf einen Film (5) innerhalb der Filmkamera durch Belichtung desselben mittels eines über eine Aktiviereinheit aktivierbaren optischen Anzeigeelementes (26), und mit einer im Strahlengang des durch das Kameraobjektiv hindurchtretenden Lichtes angeordneten, rotierbaren Umlaufblende (1), die bei Rotation jeweils das durch das Objektiv tretende Licht während einer halben Umdrehung in das Suchersystem umlenkt und während der anderen halben Umdrehung zu einem Bildfenster (3) durchläßt, wobei die Aktiviereinheit (6) eine das Antriebselement der Umlaufblende (1) steuernde Blendensteuereinheit beinhaltet, über welche die Umlaufblende (1) während des Belichtungsvorganges durch das Anzeigeelement (26) in ihrer das Bildfenster (3) abdeckenden Stillstandposition gehalten ist.

## Beschreibung

Die Erfindung betrifft eine Filmkamera mit einer Vorrichtung zur Aufzeichnung von Information, z.B. einer Buchstaben- und/oder Zahlenkombination, auf einen Film innerhalb der Filmkamera durch Belichtung desselben für eine vorbestimmbare Zeitspanne mittels eines über eine Aktiviereinheit aktivierbaren, optischen Anzeigeelementes.

Filmkameras der vorstehend genannten Art sind seit geraumer Zeit im Einsatz und ermöglichen die Aufzeichnung der für die weitere Verarbeitung des Filmes erforderlichen Synchroninformation, welche in den Ursprüngen der Filmtechnik durch die allseits bekannte Filmklappe erzeugt worden war, sodaß später beim Schneiden Bild und Ton vollkommen in Übereinstimmung gebracht werden kann.

Eine weitere Möglichkeit besteht darin, daß am Anfang der zu drehenden Filmszene die Synchroninformation über ein innerhalb der Filmkamera angeordnetes Anzeigeelement über mehrere Kader hinweg auf den Film belichtet wird, wobei in den bekannten Filmkameras die sonst auf der herkömmlichen Klappe angezeigten Informationen oder ein Teil derselben, wie Datum, Szenennummer o.ä. jeweils in Bildmitte aufgezeichnet werden. Am Schneidetisch kann nach Entwicklung des Filmnegativs Ton- und Filmspur in Übereinstimmung gebracht werden. Der Nachteil dieser bekannten Lösung besteht darin, daß aus der fest eingestellten Buchstaben- und/oder Zahlenkombination keine zeitlich abhängige Bezugsgröße ableitbar ist, die für eine vollautomatisierte Nachbearbeitung des Filmes verwendbar wäre.

Eine weitere Möglichkeit besteht darin, eine zeitlich abhängige Information über komplizierte Hilfsmittel auf eine eigene Belichtungsspur während des gesamten Filmablaufs aufzubringen. Dies erfordert aber technisch sehr aufwendige Vorrichtungen, mit denen eine solche Projektion erreicht werden kann, die nur mit relativ hohen Kosten zu verwirklichen sind und einen bestimmten Flächenanteils des zur Verfügung stehenden Filmes in Anspruch nehmen.

Aufgabe der Erfindung ist es daher, eine Filmkamera der eingangs genannten Art anzugeben, mit der neben anderen Informationen auch eine Zeitinformation direkt auf den Film belichtbar ist und durch die praktisch kein Filmmaterialverlust auftritt.

Erfindungsgemäß wird dies dadurch erreicht, daß eine Zeitgebereinheit vorgesehen ist, mit welcher das Anzeigeelement verbindbar ist, und daß über das Anzeigeelement die laufende Zeitinformation, z.B. die aktuelle Uhrzeit oder die ab einem vorgegebenen Nullpunkt ablaufende Zeit, und/oder weitere zeitabhängige Informationen, z.B. die laufende Kadernummer in direkt lesbarer oder kodierter Form auf den Film kaderweise belichtbar ist bzw. sind.

Die auf diese Weise am Anfang des Filmes aufgebrachte Information kann jeweils in der Mitte der Filmkader aufgebracht werden, wobei die sich ändernde Zeitinformation (Timecode-Information) auf die einzelnen Kader aufbelichtet wird. Mehrere Kader zu Beginn reichen aus, um eine Zeitbasis für die Nachbearbeitung des Filmes zu schaffen, mit der alle nachfolgenden Filmkader in zeitliche Relation zur Tonspur gesetzt werden können. Das Anzeigeelement kann somit nicht nur die bereits bekannten Informationen wie Datum, Szenennummer o.ä. auf den Film belichten, sondern auch eine laufende Zeitinformation, sodaß mehrere Bildkader mit dem aktuellen Sekunden- oder Kader-Verlauf versehen werden können.

In weiterer Ausbildung der Erfindung kann vorgesehen sein, daß eine die Zeitgebereinheit umfassende Informationseinheit als externes Modul zur Filmkamera ausgebildet ist.

Dadurch kann die Informationseinheit von der Kamera getrennt und die aufzubelichtende Information eingestellt bzw. eine Kalibrierung der Zeitgebereinheit vorgenommen werden.

Für die Abdeckung des Bildfensters während des Belichtungsvorganges wurden bisher relativ aufwendige mechanische Vorrichtungen mit einer gesteuerten Abdeckklappe vorgesehen, die relativ fehleranfällig sind, sodaß es passieren kann, daß die Belichtung durch das Anzeigeelement von dem durch das Objektiv eindringenden Licht überdeckt wird.

Gemäß einem weiteren Ausführungsbeispiel der Erfindung kann daher vorgesehen sein, daß eine - an sich bekannte - rotierbare Umlaufblende angeordnet ist, die bei Rotation jeweils das durch das Objektiv tretende Licht während einer halben Umdrehung in das Suchersystem umlenkt und während der anderen halben Umdrehung zu einem Bildfenster durchläßt, und daß die Aktiviereinheit eine das Antriebselement der Umlaufblende steuernde Blendensteuereinheit beinhaltet, über welche die Umlaufblende während des Belichtungsvorganges durch das Anzeigeelement in ihrer das Bildfenster abdeckenden Stillstandposition gehalten ist.

Auf diese Weise kann die Abdeckung des Bildfensters während der Aufzeichnung der Zeitinformation präzise und verläßlich vorgenommen werden. Die Umlaufblende läßt abwechselnd während einer Halbumdrehung das in das Objektiv eindringende Licht einmal zum Suchersystem und während der anderen Halbumdrehung zum Bildfenster zur Filmbelichtung durch. Bei Anhalten des Filmtransports wird das Antriebselement der Umlaufblende elektronisch so heruntergefahren, daß bei Stillstand der Umlaufblende das Bildfenster abgedeckt und über das Suchersystem freie Sicht durch das Objektiv gewährleistet ist. In der erfindungsgemäßen Filmkamera wird nun bei Betätigen der Aktiviereinheit, die ein Belichten des Filmes mit dem von dem Anzeigeelement ausgestrahlten Licht bewirkt, die Umlaufblende zuvor in ihre Stillstandposition gebracht oder dort belassen und dadurch das Bildfenster verläßlich abgedeckt. Dies ist aufgrund der hohen Präzision der mit der Umlaufblende erreichbaren Bewegungssteuerung so verläßlich durchführbar, daß die Abdeckung des Bildfensters mit Sicherheit gewährleistet ist. Damit werden Überbelichtungen, die die Synchroninformation unlesbar machen könnten, wirkungsvoll vermieden. Nach vollbrachter Aufzeichnung der Information auf einigen Filmkadern wird dieser Vorgang beendet, indem die Aktiviereinheit wieder deaktiviert wird und zugleich die Umlaufblende wieder in Rotation versetzt wird, welche Rotationsbewegung nachfolgend automatisch mit dem Filmfortbewegungsantrieb in Synchronlauf gebracht wird.

In weiterer Ausbildung der Erfindung kann vorgesehen sein, daß ein zum Bildfenster in Filmtransportrichtung um eine oder mehrere Kaderlängen versetztes, vorzugsweise kreisförmiges Belichtungsfenster vorgesehen ist, durch das die am Anzeigeelement dargestellte Information auf den sich schrittweise vorbeibewegenden Film projizierbar ist. Das solcherart angeordnete Bildfenster ermöglicht eine abseits vom Bildfenster gelegene, getrennte Belichtungsmöglichkeit für die Informationsaufzeichnung. Wird die Aktiviereinheit betätigt, leuchtet das Anzeigeelement mit der auf diesem wiedergegebenen Information genau innerhalb der Zeitspanne auf, während der der schrittweise am Belichtungsfenster vorbeibewegte Film gerade in der zwischen den Schritten eingenommenen Ruheposition verharrt. Dazu erfolgt eine geeignete Synchronisierung der Aktiviereinheit und der Filmtransporteinrichtung.

Gemäß einem weiteren Ausführungsbeispiel der Erfindung kann vorgesehen sein, daß das Anzeigeelement durch ein aktives Anzeigeelement, vorzugsweise ein mehrstelliges LED-Anzeigeelement zur Anzeige von auf dem Film aufzuzeichnender Information gebildet ist. Über ein derartiges LED-Anzeigeelement kann die aufzuzeichnende Information in beliebiger Form angezeigt und auf den Film belichtet werden. Es sind auch andere bekannte Anzeigeelemente einsetzbar, die eine geeignete Belichtung auf dem Filmkader hervorrufen können.

Zur Erzeugung einer möglichst scharfen Abbildung der auf dem Anzeigeelement dargestellten Information kann gemäß einem weiteren Ausführungsbeispiel der Erfindung vorgesehen sein, daß eine Abbildungsoptik angeordnet ist, über die das vom Anzeigeelement abgestrahlte Licht durch das Belichtungsfenster auf den Film projizierbar ist.

Weiters kann aus Platzgründen zwischen dem Belichtungsfenster und der Abbildungsoptik ein Umlenkprisma angeordnet sein.

Besonders wichtig für eine exakte Synchronisierung von Bild und Ton ist die Übereinstimmung der von beiden Aufzeichnungsarten verwendeten Zeittakten. Die Zeitgebereinheit kann zu diesem Zweck gemäß einer weiteren Ausführungsform der Erfindung mit einer vorzugsweise transportablen Zeitkalibriereinheit zur Kalibrierung der Zeitgebereinheit verbindbar sein.

Weiters betrifft die Erfindung ein Verfahren zur Belichtung einer Information auf einen Film unter Anwendung einer erfindungsgemäßen Filmkamera.

Aufgabe ist es dabei, eine für die spätere Synchronisation verwendbare Zeitinformation auf den Film aufzubringen, ohne daß dabei nennenswert Filmmaterial verloren geht.

Erfindungsgemäß wird dies dadurch erreicht, daß vor jeder Filmsequenz für mehrere Kader eine laufende Zeitinformation, z.B. die aktuelle Uhrzeit oder die ab einem vorgegebenen Nullpunkt ablaufende Zeit, und/oder weitere zeitabhängige Informationen, z.B. die laufende Kadernummer in direkt lesbarer oder kodierter Form kaderweise auf den Film belichtet wird bzw. werden.

Auf diese Weise wird die Zeitinformation vor Beginn der Realbildaufnahmen direkt auf den Film aufgezeichnet und kann bei der Nachbearbeitung von dort abgelesen und von der automatischen Bearbeitungsvorrichtung intern weitergeführt werden.

In weiterer Ausbildung der Erfindung kann vorgesehen sein, daß während der kaderweisen Vorbei führung des Filmes an dem Bildfenster der Filmkamera die rotierbare Umlaufblende für eine vorbestimmbare Zeitspanne in ihrer das Bildfenster abdeckenden Stellung angehalten wird, und daß währenddessen der Film mit dem Licht des Anzeigeelementes kaderweise belichtet wird.

Das Anzeigeelement leuchtet dabei nur in den Momenten auf, in denen der schrittweise am Belichtungsfenster vorbeibewegte Film kurz verharrt, worauf der nächste zu belichtende Bildkader vor das Belichtungsfenster transportiert wird. Dadurch wird eine exakte und zuverlässige Abdeckung des Bildfensters zum Schutz vor dem durch das Objektiv eindringenden Licht ermöglicht, sodaß es zu keiner Überbelichtung der durch das Anzeigeelement aufgezeichneten Information kommen kann.

In weiterer Ausbildung der Erfindung kann vorgesehen sein, daß nach Ende der Belichtung durch das Anzeigeelement die Umlaufblende wieder in Rotation versetzt und mit der Filmtransportgeschwindigkeit synchronisiert wird.

Sobald Umlaufblende und Filmtransportgeschwindigkeit wieder synchronisiert sind, kann mit der Realbildbelichtung begonnen werden.

Die Erfindung betrifft weiters ein Verfahren zur Synchronisierung einer Filmsequenz mit einer Tonaufzeichnung unter Anwendung einer erfindungsgemäßen Filmkamera.

Die Aufgabe der Erfindung besteht darin, ein Verfahren anzugeben, das mit geringem technischen Aufwand eine Bereitstellung und automatisierte Weiterverarbeitung der Synchronisierungsinformation ermöglicht.

Erfindungsgemäß wird dies dadurch erreicht, daß am Beginn der Filmaufnahme die Zeitinformation in direkt lesbarer oder maschinenlesbar kodierter Form mit der Vorrichtung zur Aufzeichnung von Information auf den Film belichtet wird, und daß nach der Negativentwicklung des Films die auf den Einzelbildern enthaltene direkt oder maschinenlesbare Information mittels eines Lesegeräts, vorzugsweise eines Laser-Lesegeräts, abgetastet und gegebenenfalls dekodiert wird.

Auf diese Weise gelingt es, die Überspielung von Film auf Video automatisiert durchzuführen. Die im aufgenommenen, maschinenlesbaren Kode oder in direkt lesbarer Form beinhaltete Information wird mittels optischer Abtastung eingelesen, gegebenenfalls entschlüsselt und in entsprechender Form auf das Videoband übertragen, wodurch die richtige Zeitrelation zur Tonspur automatisch einstellbar wird. Mit Hilfe des Videobandes läßt sich nunmehr das Bearbeiten, insbesondere das Schneiden des Filmes vollelektronisch durchführen, wobei die zu entfernenden bzw. einzufügenden Kader aufgrund der zur Verfügung stehenden Zeitinformation genau identifiziert werden können.

In weiterer Ausbildung der Erfindung kann vorgesehen sein, daß bei der Übertragung der Bildinformation vom Film auf ein Videoband der Inhalt der Zeitinformation jedes Film-Einzelbildes auf der jedem Video-Einzelbild zugeordneten Zeitkode-Spur des Videobandes mitaufgezeichnet wird, und daß jedem nachfolgenden Videobild die synchronisierte Zeitinformation zugeordnet wird.

Sobald der Film nun in seiner elektronischen Form zur Gänze fertiggestellt ist, wird die Bearbeitungsinformation verwendet, um den ursprünglichen Negativfilm genau nach den aufgezeichneten, elektronischen Schneideinformationen zu verarbeiten. Der Vorteil dieser Methode besteht darin, daß der sehr empfindliche Negativfilm in einem Arbeitsgang in seine Endfassung gebracht werden kann, während bisher abwechselnd die Änderung und Überprüfung der einzelnen Filmszenen in teilweise sehr mühsamer Arbeit vorgenommen werden mußte.

Nachstehend wird die Erfindung anhand der in den Zeichnungen dargestellten Ausführungsbeispielen eingehend erläutert. Es zeigt dabei
Fig. 1 eine Zeitgeberkalibriereinheit und eine Informationseinheit mit Zeitgebereinheit im Schrägriß;
Fig.2 einen Schrägriß der Aufzeichnungsvorrichtung der erfindungsgemäßen Filmkamera gemäß Fig.3 im Detail;
Fig.3 Teile einer Ausführungsform der erfindungsgemäßen Filmkamera bei abgedecktem Bildfenster;
Fig.4 Teile einer Ausführungsform der erfindungsgemäßen Filmkamera bei nicht abgedecktem Bildfenster;

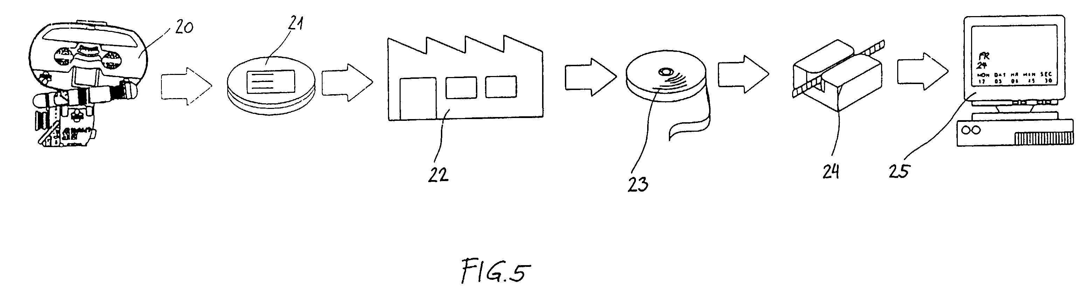

Fig.5 ein Ablaufdiagramm einer Ausführungsform des erfindungsgemäßen Verfahrens und
Fig.6 ein Blockschaltbild für die Steuerung einer Ausführungsform der erfindungsgemäßen Filmkamera.

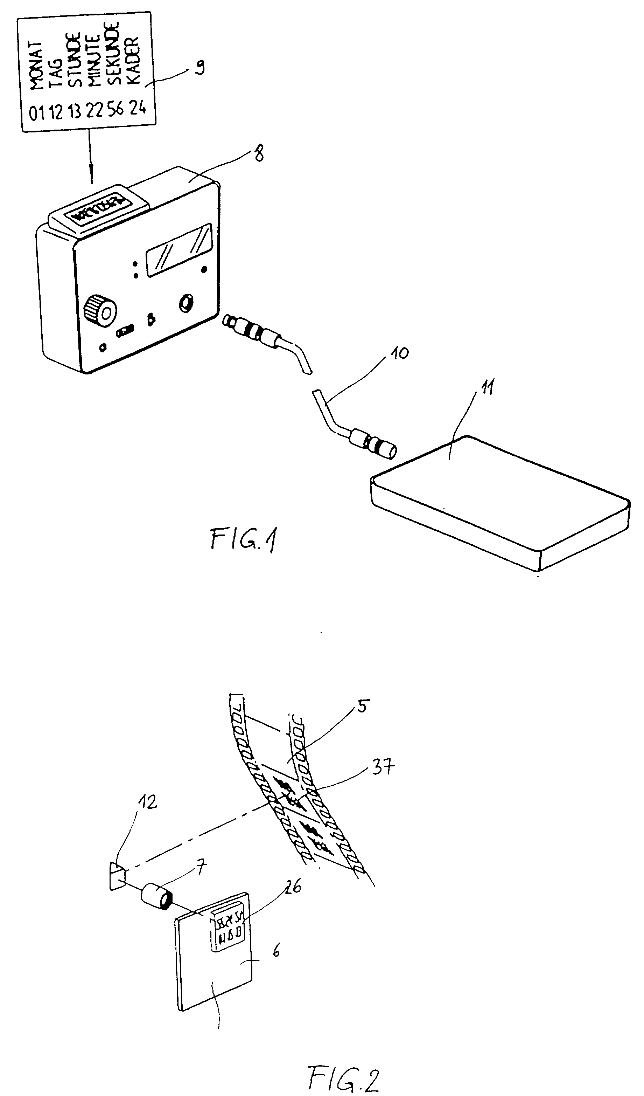

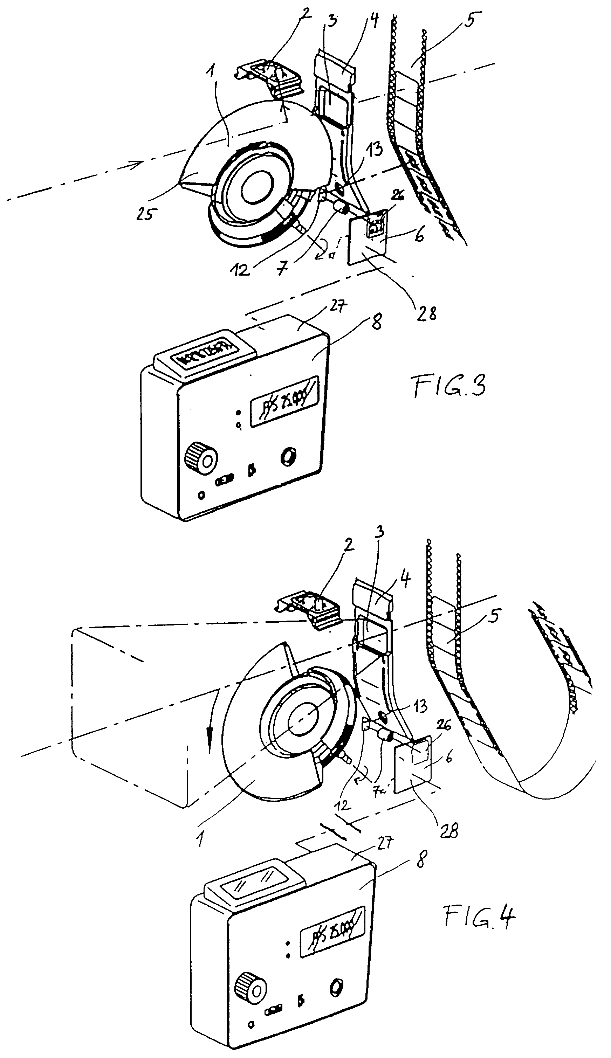

In den Fig.3 und 4 sind unter anderem Teile des optischen Systems einer Filmkamera dargestellt, bei der im Strahlengang des durch ein nicht dargestelltes Kameraobjektiv hindurchtretenden Lichtes eine rotierbare Umlaufblende 1 angeordnet ist. Die schräg zur optischen Achse der Kamera angeordnete Umlaufblende 1 ermöglicht eine Filmaufnahme ohne Strahlteilung für das Suchersystem. Dazu ist die Umlaufblende 1 mit einer reflektierenden Fläche 25 versehen, die das durch das Objektiv tretende Licht während einer halben Umdrehung der Umlaufblende 1 um ihre eigene Achse in das Sucherokular 2 lenkt. Diese in Fig.3 gezeigte Stellung deckt ein hinter der Blende befindliches, in einer Bildbühne 4 ausgenommenes Bildfenster 3 vollkommen ab, sodaß ein an diesem schrittweise vorbeibewegter Film 5 nicht belichtet werden kann.

In Fig.4 ist hingegen eine während der anderen halben Umdrehung auftretende Stellung der Umlaufblende gezeigt, während der das durch das Objektiv in die Kamera gelangende Licht auf das Bildfenster 3 und dem dahinter befindlichen Film 5 fällt und dort das aufzunehmende Bild aufbelichtet.

Aufgrund der relativ hohen Umdrehungszahl ist die ständige Rotation der Umlaufblende 1 im Sucherfeld für das menschliche Auge nicht detektierbar, vielmehr glaubt der Benutzer der Kamera ein stehendes, natürliches Bild zu sehen. Die Abdeckstellung in Fig.3 erfolgt immer während des Transportschrittes des Films. Die Belichtung desselben geschieht während der offenen Blendenhalbumdrehung, wie sie in Fig.4 dargestellt ist. Während dieser Halbdrehung gelangt kein Licht in das Sucherokular 2 und der Film befindet sich gerade in seiner zwischen den über ein Greifersystem ausgeführten Transportschritten eingenommenen Ruhestellung, sodaß eine scharfe Abbildung auf dem Film hervorgerufen werden kann.

Um am Filmanfang eine für die spätere Synchronisierung verwertbare Information, z.B. eine Zeitinformation auf den Film belichten zu können, ist eine Vorrichtung zur Aufzeichnung von Information vorgesehen, bei der die Belichtung mittels eines über eine Aktiviereinheit 6 aktivierbaren optischen Anzeigeelements 26 geschieht.

Erfindungsgemäß ist eine Zeitgebereinheit 27 vorgesehen, mit welcher das Anzeigeelement 26 verbindbar ist, wie dies in Fig. 3 dargestellt ist. Über das Anzeigeelement 26 ist dadurch die laufende Zeitinformation, z.B. die aktuelle Uhrzeit oder die ab einem vorgegebenen Nullpunkt ablaufende Zeit, und/oder weitere zeitabhängige Informationen, z.B. die laufende Kadernummer in direkt lesbarer oder kodierter Form auf den Film kaderweise belichtbar.

Vor jeder Filmsequenz wird für mehrere Zeitkader eine laufende Zeitinformation, z.B. die aktuelle Uhrzeit oder die ab einem vorgegebenen Nullpunkt ablaufende Zeit, und/oder weitere zeitabhängige Informationen, z.B. die laufende Kadernummer in direkt lesbarer oder kodierter Form kaderweise auf den Film belichtet.

Die Aktiviereinheit 6 beinhaltet eine das nicht dargestellte Antriebselement der Umlaufblende 1 steuernde Blendensteuereinheit 28, über welche die Umlaufblende 1 während des Belichtungsvorganges durch das Anzeigeelement 6 in ihrer das Bildfenster 3 abdeckenden Stillstandposition gehalten ist.

Um die auf den Filmanfang aufzuzeichnende Information aufzubringen, wird während der kaderweisen Vorbeiführung des Filmes 5 an dem Bildfenster 3 die rotierbare Umlaufblende 1 für eine vorbestimmbare Zeitspanne in ihrer das Bildfenster 3 abdeckenden Stellung angehalten und währenddessen der Film mit dem Licht des Anzeigeelementes 26 kaderweise belichtet. Die vorbestimmbare Zeitspanne bzw. die Anzahl der mit Information zu belichtenden Kader ist dabei durch die Aktiviereinheit 6 einstellbar.

Zu diesem Zweck ist ein zum Bildfenster 3 in Filmtransportrichtung um eine oder mehrere Kaderlängen versetztes, kreisförmiges Belichtungsfenster 13 vorgesehen, durch das die am Anzeigeelement 26 dargestellte Information auf den sich schrittweise vorbeibewegenden Film projizierbar ist.

Das Belichtungsfenster kann auch eine rechteckige oder eine andere geometrische Form aufweisen.

Das Anzeigeelement 26 ist in dem gezeigten Ausführungsbeispiel durch ein mehrstelliges LED-Anzeigeelement gebildet, das zur Anzeige von der auf dem Film aufzuzeichnenden Information dient. Ein Beispiel für eine solche auf den Film aufgezeichnete Information ist als Tafel 9 (Fig.1) angegeben, wobei Monat, Tag, Stunde, Minute, Sekunde und die fortlaufende Nummer des jeweils hinter dem Belichtungsfenster 3 stehenden Kaders auf den Film 5 belichtet werden kann.

Ein auf den Film aufbelichteter Informationsblock 37 ist in Fig.2 angedeutet.

Weiters ist im Ausführungsbeispiel gemäß Fig. 3 und 4 zur scharfen Aufbelichtung eine Abbildungsoptik 7 angeordnet, über die das vom Anzeigeelement 26 abgestrahlte Licht durch das Belichtungsfenster 13 auf den Film 5 projizierbar ist. Zwischen dem Belichtungsfenster 13 und der Abbildungsoptik 7 ist ein Umlenkprisma 12 angeordnet, das eine platzsparendc Anordnung der Anzeige seitlich der Bildbühne 4 ermöglicht.

Das Anzeigeelement 26 kann wie bereits vorstehend erwähnt Informationen in beliebiger Form auf den Film belichten. Je nach optischer Auflösung des Anzeigeelements 26 können somit verschiedenste Zahlen- und/oder Buchstabenkombinationen oder Strichkodes o.ä. auf das Filmnegativ belichtet werden. Insbesondere kann auch eine laufende Zeitinformation angezeigt und aufgezeichnet werden. Zu diesem Zweck ist das Anzeigeelement 26 mit einer eine Zeitgebereinheit 27 umfassenden Informationseinheit 8 verbindbar. Mit dieser kann die laufende Zeit und andere Informationen, die über eine Eingabe einzugeben sind, an das Anzeigeelement 26 weitergegeben werden. Diese Informationseinheit 8 kann als externes Modul zur Filmkamera ausgeführt sein, das über eine Steckverbindung mit dieser verbindbar ist. Dies hat den Vorteil, daß die Informationseinheit 8 von der Kamera abgenommen und von dieser getrennt eingestellt bzw. programmiert werden kann. Dadurch ist es auch möglich, eine Zeitkalibriereinheit 11 vorzusehen, wie sie in Fig.1 angedeutet ist, mit der die Zeitgebereinheit 27 der Informationseinheit 8 nach einer gewissen Betriebszeit kalibriert werden kann. Dazu wird die Zeitkalibriereinheit 11 über ein Verbindungskabel 10 mit der Informationseinheit 8 verbunden und die Zeitgebereinheit 27 auf die genauere Zeitbasis der Kalibriereinheit 11 rückgesetzt.

Ein mit der erfindungsgemäßen Filmkamera 20 durchführbares Verfahren zur Synchronisierung einer Filmsequenz mit einer Tonaufzeichnung ist in Fig. 3 schematisch abgebildet, dessen erster Schritt im wesentlichen darin besteht, daß am Beginn der Aufnahme mit der Vorrichtung zur Aufzeichnung von Information in direkt lesbarer oder maschinenlesbar kodierter Form auf den Film 5 belichtet wird.

Nach den Dreharbeiten wird das belichtete Negativ 21 in einer Entwicklungsanlage 22 zu einem entwickelten Filmnegativ 23 verarbeitet.

Auf die erfolgten Negativentwicklung des Films wird die auf den Einzelbildern des Filmnegativs 23 enthaltene direkt oder maschinenlesbare Information, z.B. eine Zahlen- und/oder Buchstabenfolge oder ein Strichkode mittels eines Lesegeräts 24, vorzugsweise in Form eines Laser-Lesegeräts, abgetastet und gegebenenfalls dekodiert.

Bei der nachfolgenden Übertragung der Bildinformation vom Film auf ein Videoband wird der Inhalt der auf jedem Film-Einzelbild aufgezeichneten Information auf der jedem Video-Einzelbild zugeordneten Zeitkode-Spur des Videobandes mitaufgezeichnet, und jedem nachfolgenden Videobild die synchronisierte Zeitinformation zugeordnet.

Schließlich wird das Videoband mittels der synchronisierten Zeitinformation elektronisch bearbeitet, indem die gewünschten Szenenfolgen festgelegt werden. Dabei werden z.B. im Schneidevorgang Einzelbilder hinzugenommen oder weggelassen.

Die sich ergebenden Änderungen werden den Filmkadern des entwickelten Films zugeordnet und durch Endbearbeitung des Films, z.B. durch Schneiden und Kleben, auf diesen übertragen. Durch die mit Hilfe der aufgezeichneten Information gewonnene feste Zeitrelation zwischen Bild und Ton wird deren vollständige zeitliche Übereinstimmung auch nach Durchführung von Bearbeitungsvorgängen ermöglicht.

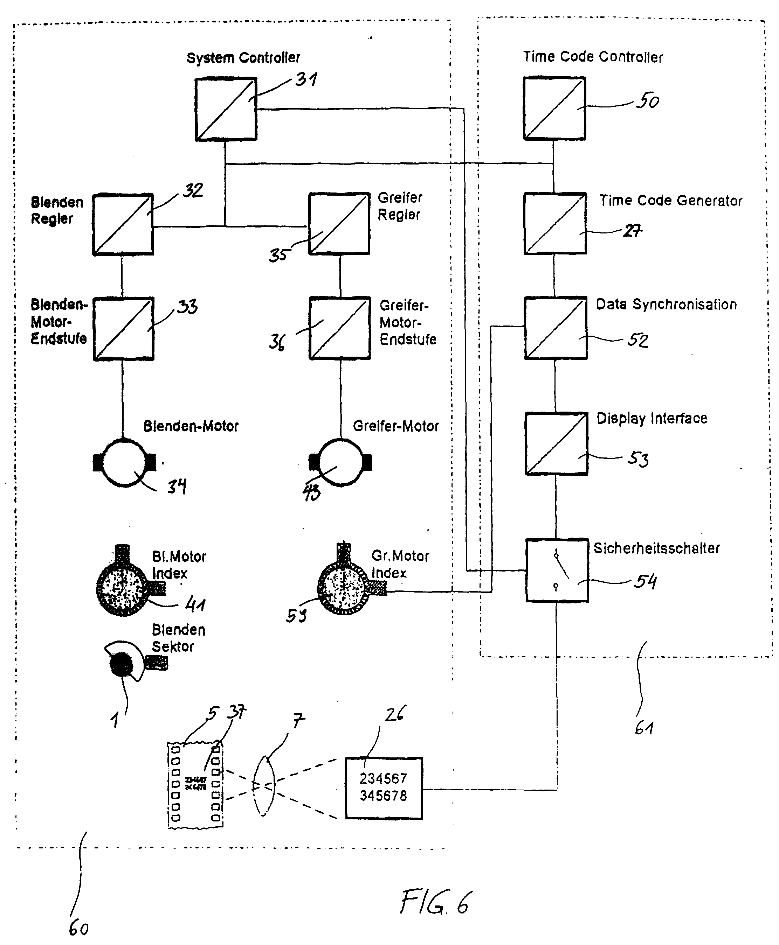

In Fig.6 ist ein Blockschaltbild angegeben, mit dem die Steuerung der erfindungsgemäßen Filmkamera durchführbar ist. Im Funktionsteil 60 des Blockschaltbildes sind die Einheiten angeführt, die vorzugsweise im Kameragehäuse untergebracht sind, während im Funktionsteil 61 jene Einheiten eingezeichnet sind, die in der externen Informationseinheit 8 vorhanden sind. Eine Systemüberwachungseinheit 31 überwacht sowohl die Einheit 60 als auch die Einheit 61, wenn die Informationseinheit an das Kameragehäuse angesteckt ist. Eine grundlegende Funktion übernimmt dabei der Sicherheitsschalter 54, der verhindert, daß die Anzeigeeinheit 26 dann aufleuchtet, wenn die Realbildbelichtung im Gang ist, also während der eigentlichen Filmdreharbeiten. Zwischen dem Anzeigeelement 26 und dem schrittweise bewegten Film ist genauso wie in Fig.2 eine Abbildungsoptik 7 angeordnet. Die restlichen Teile wie Filmbühne oder Belichtungsfenster sind in Fig.6 der Einfachheit halber nicht eingezeichnet.

Die Zeitgebereinheit 27 erzeugt zumindest teilweise jene Information 37, die auf den Film 5 aufbelichtet werden soll. Diese Zeitdaten nehmen ihren Weg zu einer Anzeige-Schnittstelle 53 und zum Anzeigeelement 26 über eine Datensynchronisationseinheit 52, die jeweils genau dann die Anzeige ansteuert, wenn sich der Film 5 in seinem kurzzeitigen Ruhetakt zwischen den laufenden Schritten hinter dem Belichtungsfenster 13 befindet. Diese Synchroninformation erhält die Datensynchronisationseinheit über einen Greifermotor-Index 59, aus dem die Stellung der Filmgreifer auslesbar ist.

Die im Funktionsteil 60 ablaufenden Steuervorgänge betreffen einerseits die über einen Blendenmotor 34 angetriebene Umlaufblende 1 und den über einen Greifer-Motor 43 angetriebenen Filmgreifer. Da der Filmtransport auch mit anderen Mitteln als mit einem Filmgreifer geschehen kann, kann der Greifermotor 43 als durch einen anderen Antriebsmotor ersetzt gedacht werden. Der Blenden-Motor 34 und der Greifer-Motor 43 sind über einen Blenden-Regler 32 bzw. einen Greifer-Regler 35 und über eine Blenden-Motorendstufe 33 bzw. eine Greifer-Motorendstufe 36 angetrieben, die über die Systemüberwachungseinheit 31 gesteuert sind.

Eine mögliche Vorgangsweise für die erfindungsgemäße Aufzeichnung von Information ist im folgenden beschrieben, es können aber je nach Antriebseinheiten in der Filmkamera auch andere Arten des Filmtransports eingesetzt werden.

Der Beginn der kaderweisen Aufbelichtung erfolgt jeweils kurz nach dem Ende des Filmtransportschrittes mit dem der Stillstand des Filmes z.B. durch eingetauchte Sperrgreifer bereits sichergestellt ist. Die gesamte Aufbelichtungssequenz erfolgt dabei unmittelbar nach Erreichen der Laufgeschwindigkeit des Greifermotors 43. Erst nachdem eine Vielzahl von Kadern auf dem Film mit der Zeitinformation und/oder einer anderen Information belichtet worden ist, wird die Umlaufblende 1 in Rotation versetzt und läuft danach auf ihre Nenndrehzahl, die mit Hilfe des Blenden-Motorindex 41 und des Greifer-Motorindex mit der Greifermotordrehzahl synchronisiert wird. Die Belichtungszeit der Kaderaufbelichtung richtet sich nach der Filmempfindlichkeit, die von einer Voreinstellung an der Filmkamera bestimmt wird.

## Patentansprüche

1. Filmkamera mit einer Vorrichtung zur Aufzeichnung von Information, z.B. einer Buchstaben- und/oder Zahlenkombination, auf einen Film innerhalb der Filmkamera durch Belichtung desselben für eine vorbestimmbare Zeitspanne mittels eines über eine Aktiviereinheit aktivierbaren, optischen Anzeigeelementes, **dadurch gekennzeichnet**, daß eine Zeitgebereinheit (27) vorgesehen ist, mit welcher das Anzeigeelement (26) verbindbar ist, und daß über das Anzeigeelement (26) die laufende Zeitinformation, z.B. die aktuelle Uhrzeit oder die ab einem vorgegebenen Nullpunkt ablaufende Zeit, und/oder weitere zeitabhängige Informationen, z.B. die laufende Kadernummer in direkt lesbarer oder kodierter Form auf den Film kaderweise belichtbar ist bzw. sind.

2. Filmkamera nach Anspruch 1, **dadurch gekennzeichnet**, daß eine die Zeitgebereinheit (27) umfassende Informationseinheit (8) als externes Modul zur Filmkamera ausgebildet ist.

3. Filmkamera nach Anspruch 1 oder 2, **dadurch gekennzeichnet**, daß eine - an sich bekannte - rotierbare Umlaufblende (1) angeordnet ist, die bei Rotation jeweils das durch das Objektiv tretende Licht während einer halben Umdrehung in das Suchersystem umlenkt und während der anderen halben Umdrehung zu einem Bildfenster (3) durchläßt, und daß die Aktiviereinheit (6) eine das Antriebselement der Umlaufblende (1) steuernde Blendensteuereinheit beinhaltet, über welche die Umlaufblende (1) während des Belichtungsvorganges durch das Anzeigeelement (26) in ihrer das Bildfenster (3) abdeckenden Stillstandposition gehalten ist.

4. Filmkamera nach Anspruch 1, 2 oder 3, **dadurch gekennzeichnet**, daß ein zum Bildfenster (3) in Filmtransportrichtung um eine oder mehrere Kaderlängen versetztes, vorzugsweise kreisförmiges Belichtungsfenster (13) vorgesehen ist, durch das die am Anzeigeelement (26) dargestellte Information auf den sich schrittweise vorbeibewegenden Film projizierbar ist.

5. Filmkamera nach einem der Ansprüche 1 bis 4, **dadurch gekennzeichnet**, daß das Anzeigeelement durch ein aktives Anzeigeelement, vorzugsweise ein mehrstelliges LED-Anzeigeelement (26) zur Anzeige von auf dem Film aufzuzeichnender Information gebildet ist.

6. Filmkamera nach einem der Ansprüche 1 bis 5, **dadurch gekennzeichnet**, daß eine Abbildungsoptik (7) angeordnet ist, über die das vom Anzeigeelement (26) abgestrahlte Licht durch das Belichtungsfenster (13) auf den Film (5) projizierbar ist.

7. Filmkamera nach Anspruch 6, **dadurch gekennzeichnet**, daß zwischen dem Belichtungsfenster (13) und der Abbildungsoptik (7) ein Umlenkprisma (12) angeordnet ist.

8. Filmkamera nach einem der Ansprüche 1 bis 7, **dadurch gekennzeichnet**, daß die Zeitgebereinheit (27) mit einer vorzugsweise transportablen Zeitkalibriereinheit (11) zur Kalibrierung der Zeitgebereinheit verbindbar ist.

9. Verfahren zur Belichtung einer Information auf einen Film unter Anwendung einer Filmkamera nach einem der Ansprüche 1 bis 1, **dadurch gekennzeichnet**, daß vor jeder Filmsequenz für mehrere Zeitkader eine laufende Zeitinformation, z.B. die aktuelle Uhrzeit oder die ab einem vorgegebenen Nullpunkt ablaufende Zeit, und/oder weitere zeitabhängige Informationen, z.B. die laufende Kadernummer in direkt lesbarer oder kodierter Form kaderweise auf den Film belichtet wird bzw. werden.

10. Verfahren nach Anspruch 9, **dadurch gekennzeichnet**, daß während der kaderweisen Vorbeiführung des Filmes an dem Bildfenster (3) der Filmkamera die rotierbare Umlaufblende (1) für eine vorbestimmbare Zeitspanne in ihrer das Bildfenster (3) abdeckenden Stellung angehalten wird, und daß währenddessen der Film mit dem Licht des Anzeigeelementes (26) kaderweise belichtet wird.

11. Verfahren nach Anspruch 10, **dadurch gekennzeichnet**, daß nach Ende der Belichtung durch das Anzeigeelement (26) die Umlaufblende (1) wieder in Rotation versetzt und mit der Filmtransportgeschwindigkeit synchronisiert wird.

12. Verfahren zur Synchronisierung einer Filmsequenz mit einer Tonaufzeichnung unter Anwendung einer Filmkamera nach einem der Ansprüche 1 bis 8, **dadurch gekennzeichnet**, daß am Beginn der Filmaufnahme die Zeitinformation in direkt lesbarer oder maschinenlesbar kodierter Form mit der Vorrichtung zur Aufzeichnung von Information auf den Film belichtet wird, und daß nach der Negativentwicklung des Films die auf den Einzelbildern enthaltene direkt oder maschinenlesbare Information mittels eines Lesegeräts, vorzugsweise eines Laser-Lesegeräts, abgetastet und gegebenenfalls dekodiert wird.

13. Verfahren nach Anspruch 12, **dadurch gekennzeichnet**, daß bei der Übertragung der Bildinformation vom Film auf ein Videoband der Inhalt der Zeitinformation jedes Film-Einzelbildes auf der jedem Video-Einzelbild zugeordneten Zeitkode-Spur des Videobandes mitaufgezeichnet wird, und daß jedem nachfolgenden Videobild die synchronisierte Zeitinformation zugeordnet wird.
